# EUROPEAN PATENT SPECIFICATION

(11) **EP 0 768 037 B1**
(45) Date of publication and mention of the grant of the patent: **05.12.2001**
(21) Application number: 96305367.3
(22) Date of filing: 22.07.1996
(51) Int. Cl.: A23B 7/04, A23L 1/212

(54) **Process for preparing frozen portions of leaf vegetables**
Verfahren zur Behandlung von gefrorenen Blattgemüse-Portionen
Procédé de préparation de portions congelées de légumes à feuilles

(30) Priority: 31.08.1995 EP 95306092
(43) Date of publication of application: 16.04.1997
(73) Proprietor: UNILEVER PLC, London EC4P 4BQ (GB); UNILEVER N.V., 3013 AL Rotterdam (NL)
(72) Inventor: Torriti, Leopoldo, 04100 Latina (IT); Toselli, Salvatore, 04012 Cisterna di Latina (IT)
(74) Representative: Mulder, Cornelis Willem Reinier, Dr.

(56) References cited:
- DE-A- 3 326 721
- FR-A- 2 110 292
- GB-A- 1 214 667
- GB-A- 2 095 102
- US-A- 1 955 484
- US-A- 2 014 550
- US-A- 3 436 927
- US-A- 4 195 489
- US-A- 4 337 627
- US-A- 4 962 777

## Description

### FIELD OF THE INVENTION

The present invention relates to a process for preparing frozen portions of leaf vegetables.

### BACKGROUND TO THE INVENTION AND PRIOR ART

Leaf vegetables are often sold in packed, frozen portions. For example, spinach is commonly sold in the form of frozen blocks. These are formed using pressure to compress the spinach into channels; the spinach is frozen, thereby forming large frozen slabs, and cut, using a rotating saw, into frozen blocks weighing 50 grams each, for example. The rotating saw creates gaps between the blocks by removing, and thereby wasting, part of the frozen spinach. The compressed leaves of spinach in the frozen blocks are mashed, broken and almost unidentifiable as leaves.

The present invention seeks to provide an improved process for preparing frozen portions of leaf vegetables.

### DISCLOSURE OF THE INVENTION

According to the present invention, there is provided a process for preparing frozen clusters of leaf vegetables, comprising the steps of:
(i) forming a layer of leaf vegetables;
(ii) weighing the layer to control its weight;
(iii) separating the layer into a plurality of clusters; and
(iv) freezing the clusters.

In contrast to the known processes, the leaf vegetables are not compressed to form tightly-packed portions. The process results in minimal damage to the leaves and the leaves remain substantially intact. Each cluster has a unique, natural appearance, since individual leaves are recognisable and water, in the form of ice, is visible between the leaves. Furthermore, the process results in minimal wastage of the leaf vegetables.

Preferably, in step (i) , the layer is formed by floating the leaf vegetables on a liquid, such as water, and using compressed gas, such as air, to spread the leaf vegetables to form the layer. Also, in step (i), the layer of leaf vegetables is preferably formed continuously and the leaf vegetables in the layer preferably move in a specified direction.

Step (ii) preferably comprises extracting the leaf vegetables from the layer, weighing the extracted leaf vegetables and returning them to the layer. Step (ii) may also comprise controlling the quantity of leaf vegetables entering the layer.

Step (iii) may comprise forming the layer into at least one row and dividing the row to form clusters. Each row may be formed by directing the leaf vegetables into a channel, and means may be provided for clearing the entrance of each channel of leaf vegetable debris.

Preferably, each row is divided into portions of leaf vegetables and the portions are formed into clusters by a shaping means. In a preferred embodiment, the shaping means comprises compacting the portions to form a substantially circular shape. In an alternative embodiment, the shaping means comprises allowing the portions to fall a specified distance under the force of gravity and under the force of a jet of fluid, such as air or water.

### DETAILED DESCRIPTION OF THE INVENTION

Embodiments of the present invention will now be described, by way of example only, with reference to the accompanying diagrammatic drawings, in which:
figure 1 shows the main apparatus used for carrying out the process;
figure 2 shows apparatus used to form a layer of a leaf vegetable, to separate the layer into rows and to form clusters of the leaf vegetable;
figure 3 shows apparatus used to weigh the leaf vegetable;
figure 4 shows a channel containing the leaf vegetable, together with lateral guides to compact the row formed by the channel;
figure 5 shows apparatus for cutting rows of the leaf vegetable, and for forming portions and clusters of the leaf vegetable;
figure 6 shows alternative apparatus for forming portions and clusters of the leaf vegetable.

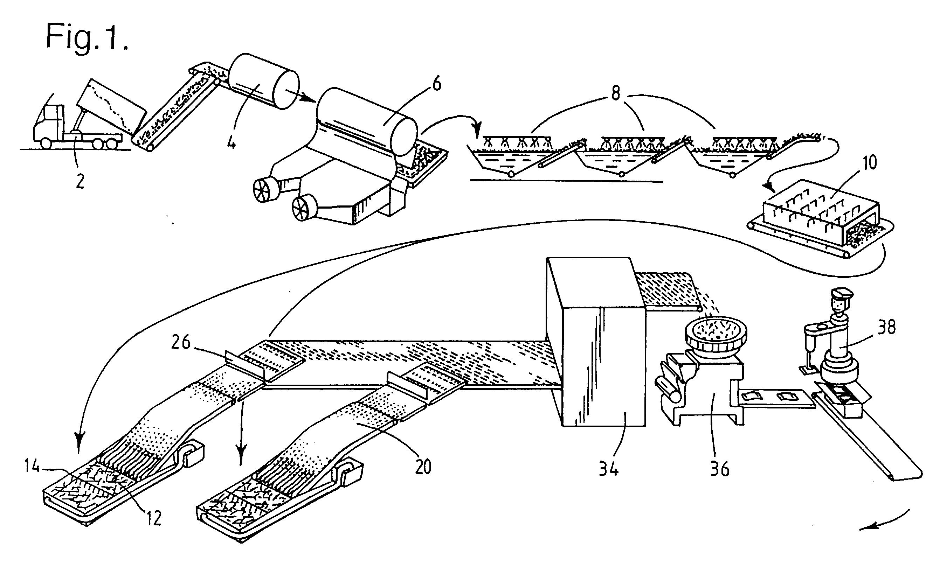

With reference to figure 1, a leaf vegetable, such as spinach, is transported from fields by a truck 2 to a processing plant. The spinach is discharged on to a conveyor belt which feeds into a dry cleaner 4 at a constant rate via a weighing belt. The dry cleaner filters out debris such as small stones and extra vegetable matter. An air blower separator (ie pneumatic sorter) 6 filters out other foreign bodies such as animals.

In three tanks 8, the spinach is washed in water, and a water-blancher/cooler 10 is used to deactivate enzymes and reduce bacteriological levels by heating for a time and at a temperature chosen to minimise stress and damage to the leaves. A further step is manual sorting of the leaves on the conveyor belt.

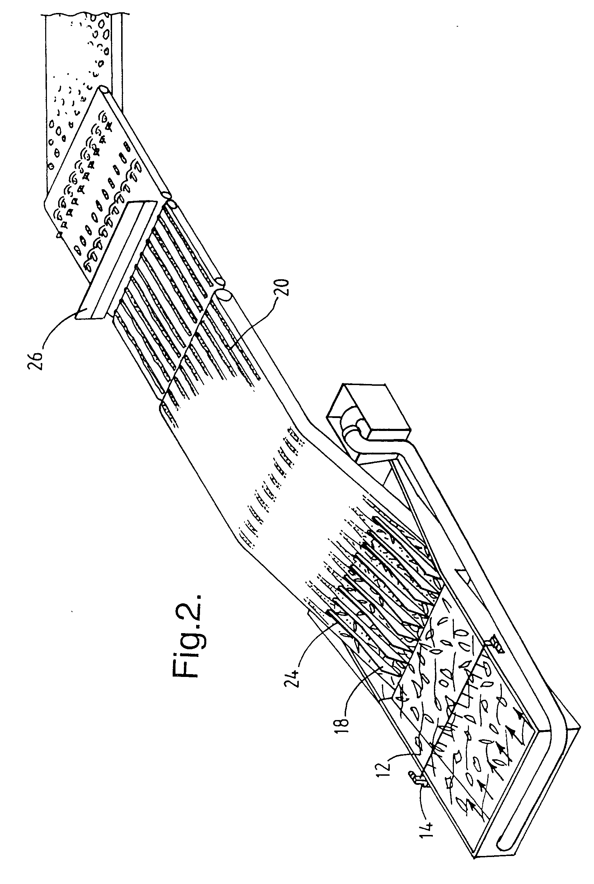

Referring to figure 2, the spinach passes from the blancher/cooler 10 to a tank of water 12 via a conveyor belt. The tank is a stainless steel vessel having a closed water loop. The spinach leaves float on the water and are spread across the water surface using compressed air blown upwardly from the bottom of the tank to form a layer. Simultaneously, a jet of water propels the spinach leaves in a continous layer towards a weighing system 14.

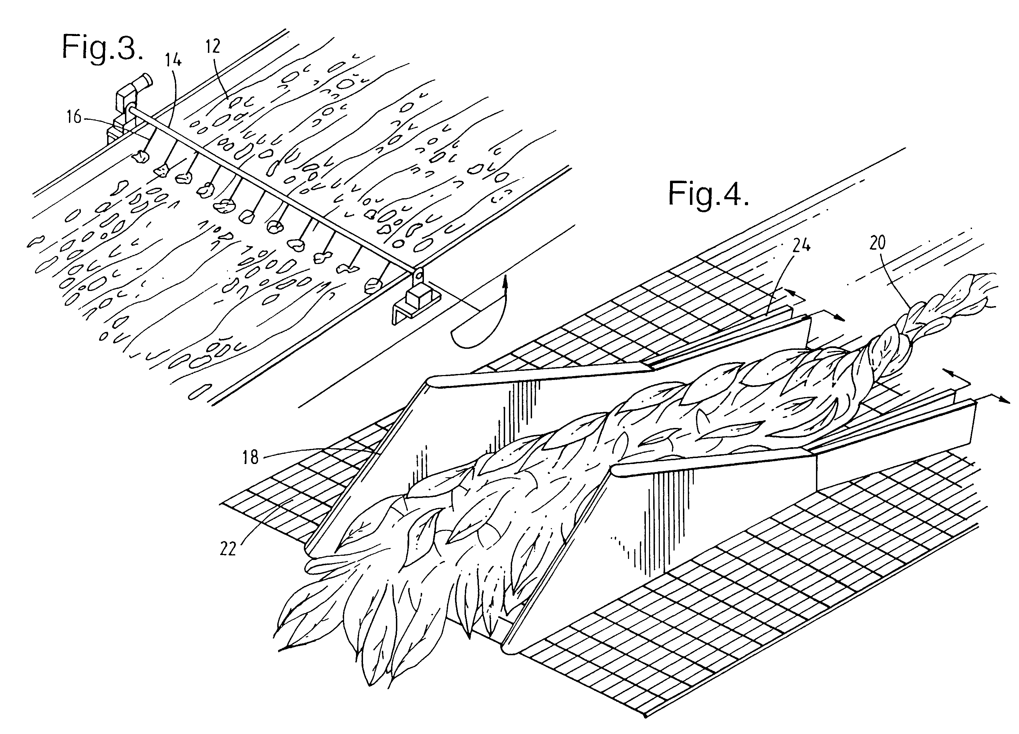

With reference to figure 3, the weighing system comprises a row of fingers 16 which pass through the water at surface level and extract spinach leaves. The total weight of spinach carried by the fingers is measured. From this measurement, a feedback signal controls the quantity of spinach entering the tank 12 from the conveyor belt emanating from the blancher/cooler 10. As a result, the quantity of spinach in the layer floating in the water tank 12 is controlled, such that a constant layer of spinach of a desired thickness is maintained.

From the water tank, a continous layer of spinach passes on to a conveyor belt where it is divided into rows 20 using channels 18. Water is used to push the free-flowing spinach into the channels. The spinach is dried by air blowing upwardly through vents 22 in the conveyor belt (see figure 4). Mechanical scrapers and jets of compressed air are used to clear spinach debris from the entrance of each channel, thereby preventing the channels from becoming blocked.

At the point where the spinach exits the water tank, the layer of spinach is approximately one or two leaves deep.

The channels separate the exiting layer of spinach into rows having a width of about 100mm and a thickness of about one or two leaves deep.

Since it is not practical to have portions of spinach of such dimensions, lateral guides 24 act to reduce the width and to increase the thickness of each row. The guides move in a transverse, alternate direction to achieve this compacting of the rows with minimal damage to the leaves, as illustrated by the arrows in figure 4.

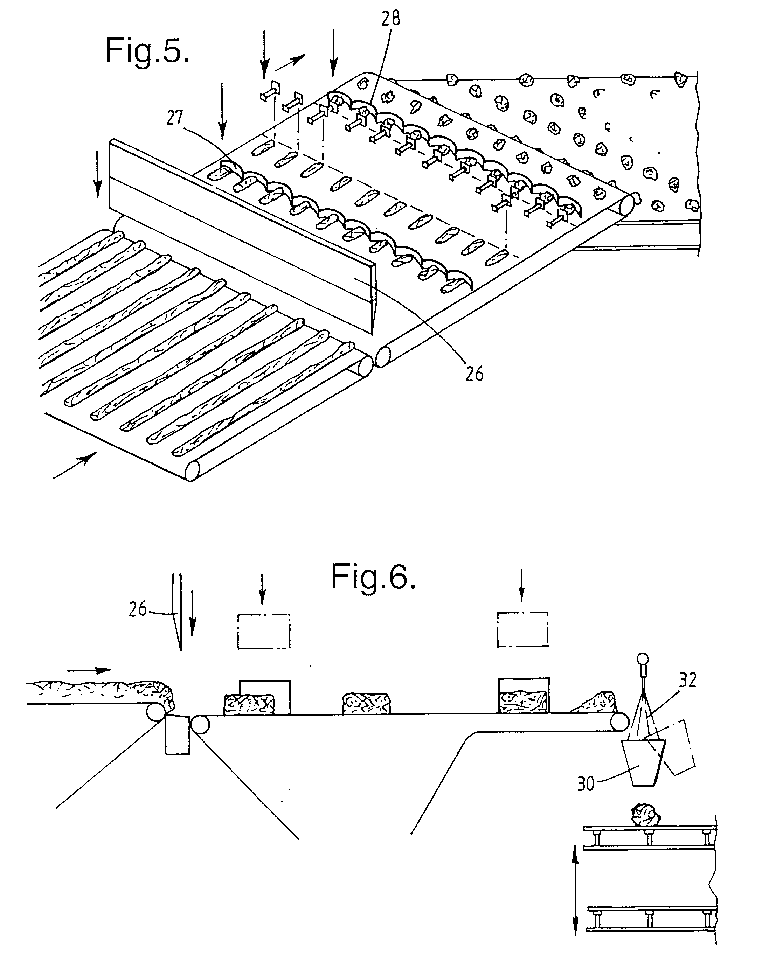

The rows of spinach are cut by a blade 26 which is moved up and down at a specified rate. This is illustrated in figure 5. The cut row passes on to a conveyor belt which regularly comes to a halt, and a mechanical stop 27 on the conveyor belt assembles each cut row into portions. The portions are shaped into clusters of substantially circular shape.

In one embodiment, as shown in figure 5, the portions are shaped into clusters by compacting them into semi-circular moulds 28.

In a second embodiment, as shown in figure 6, the portions fall a specified distance through a funnel 30 on to a conveyor belt below (the belt having a draining facility). The portions fall under the force of a jet of water 32, as well as under the force of gravity.

In both of these embodiments, it is important that the spinach leaves are substantially un-compressed. Only a small force is applied to the leaves to achieve a natural-looking cluster (ie "ciuffetti" shape) without damaging the leaves or squeezing out the water from between the leaves.

The clusters pass on to a higher speed conveyor belt upon formation, so as to space them out, and prevent them from touching and thus sticking together.

The clusters of spinach are frozen using, for example, a spiral belt tunnel 34; they are weighed, dosed into bags using a multi-head machine 36 and packed into cartons using a robot 38.

Using this process, approximately 2000 kgs of frozen clusters of spinach can be prepared per hour.

The frozen clusters of spinach so formed are approximately equal in size, weight and shape. A preferred weight is 30 to 50 grams.

This process is also suitable for other leaf vegetables, such as cabbage.

## Claims

1. A process for preparing frozen clusters of leaf vegetables, comprising the steps of:
(i) forming a layer of leaf vegetables;
(ii) weighing the layer to control its weight;
(iii) separating the layer into a plurality of clusters; and
(iv) freezing the clusters.

2. A process as claimed in claim 1, wherein, in step (i), the layer is formed by floating the leaf vegetables on a liquid.

3. A process as claimed in claim 1 or claim 2, wherein, in step (i), compressed gas is used to spread the leaf vegetables to form the layer.

4. A process as claimed in any preceding claim, wherein step (ii) comprises extracting the leaf vegetables from the layer, weighing the extracted leaf vegetables and returning them to the layer.

5. A process as claimed in any preceding claim, wherein, in step (i), the layer of leaf vegetables is formed continously and the leaf vegetables in the layer move in a specified direction.

6. A process as claimed in claim 5, wherein step (ii) comprises controlling the quantity of leaf vegetables entering the layer.

7. A process as claimed in any preceding claim, wherein step (iii) comprises forming the layer into at least one row (20) and dividing the row to form clusters.

8. A process as claimed in claim 7, wherein each row (20) is formed by directing the leaf vegetables into a channel (18).

9. A process as claimed in claim 8, wherein means are provided for clearing the entrance of each channel (18) of leaf vegetable debris.

10. A process as claimed in any one of claims 7 to 9, wherein each row is divided into portions of leaf vegetables and the portions are formed into clusters by a shaping means.

11. A process as claimed in claim 10, wherein the shaping means (28) comprises compacting the portions to form a substantially circular shape.

12. A process as claimed in claim 10, wherein the shaping means comprises allowing the portions to fall a specified distance under the force of gravity and under the force of a jet of fluid (32).

13. Apparatus for carrying out the process claimed in any preceding claim.

14. A frozen cluster of leaf vegetables prepared in accordance with the process claimed in any one of claims 1 to 12.

15. A frozen cluster of leaf vegetables as claimed in claim 14, wherein the leaf vegetable is spinach.

## Patentansprüche

1. Verfahren zur Herstellung gefrorener Häufchen von Blattgemüse, welches die Schritte umfasst:
(i) Bildung einer Schicht von Blattgemüse;
(ii) Wägen der Schicht zur Kontrolle ihres Gewichts;
(iii) Trennung der Schicht in eine Mehrzahl von Häufchen; und
(iv) Einfrieren der Häufchen.

2. Verfahren nach Anspruch 1, wobei die Schicht in Schritt (i) durch Schwimmen des Blattgemüses auf einer Flüssigkeit gebildet wird.

3. Verfahren nach Anspruch 1 oder Anspruch 2, wobei in Schritt (i) ein Druckgas verwendet wird, um das Blattgemüse zur Bildung der Schicht auszubreiten.

4. Verfahren nach einem der vorhergehenden Ansprüche, wobei Schritt (ii) das Herausziehen des Blattgemüses aus der Schicht, das Wägen des herausgezogenen Blattgemüses und seine Rückführung in die Schicht umfasst.

5. Verfahren nach einem der vorhergehenden Ansprüche, wobei in Schritt (i) die Schicht des Blattgemüses kontinuierlich gebildet wird und das Blattgemüse in der Schicht sich in eine bestimmte Richtung bewegt.

6. Verfahren nach Anspruch 5, wobei Schritt (ii) die Steuerung der Menge an Blattgemüse, das in die Schicht gelangt, umfasst.

7. Verfahren nach einem der vorhergehenden Ansprüche, wobei Schritt (iii) die Formung der Schicht zu mindestens einer Reihe (20) und die Teilung der Reihe zur Bildung von Häufchen umfasst.

8. Verfahren nach Anspruch 7, wobei jede Reihe (20) durch Lenken des Blattgemüses in einen Kanal (18) gebildet wird.

9. Verfahren nach Anspruch 8, wobei Mittel vorgesehen werden, um den Eingang jedes Kanals (18) von Blattgemüse-Abfall zu befreien.

10. Verfahren nach einem der Ansprüche 7 bis 9, wobei jede Reihe in Portionen von Blattgemüse unterteilt wird und die Portionen durch ein Formungsmittel zu Häufchen geformt werden.

11. Verfahren nach Anspruch 10, wobei das Formungsmittel (28) die Verdichtung der Portionen zur Bildung einer im Wesentlichen kreisförmigen Form umfasst.

12. Verfahren nach Anspruch 10, wobei das Formungsmittel das Fallenlassen der Portionen über eine bestimmte Strecke unter Einwirkung der Schwerkraft und unter der Kraft eines Fluid-Strahls (32) umfasst.

13. Vorrichtung zur Durchführung des Verfahrens nach einem der vorhergehenden Ansprüche.

14. Gefrorene Häufchen von Blattgemüse, hergestellt gemäß dem Verfahren nach einem der Ansprüche 1 bis 12.

15. Gefrorenes Häufchen von Blattgemüse nach Anspruch 14, wobei das Blattgemüse Spinat ist.

## Revendications

1. Procédé de préparation de touffes congelées de légumes à feuilles, comportant les étapes consistant à :
- (i) former une couche de légumes à feuilles ;
- (ii) peser la couche pour vérifier son poids ;
- (iii) séparer la couche en une pluralité de touffes ;
- (iv) congeler les touffes.

2. Procédé comme revendiqué dans la revendication 1 dans lequel, dans l'étape (i), on forme la couche en faisant flotter les légumes à feuilles sur un liquide.

3. Procédé comme revendiqué dans la revendication 1 ou la revendication 2, dans lequel, dans l'étape (i), on utilise du gaz comprimé pour étaler les légumes à feuilles pour former la couche.

4. Procédé comme revendiqué dans l'une quelconque des revendications précédentes, dans lequel l'étape (ii) comporte l'extraction des légumes à feuilles hors de la couche, la pesée des légumes à feuilles extraits et leur renvoi dans la couche.

5. Procédé comme revendiqué dans l'une quelconque des revendications précédentes, dans lequel, dans l'étape (i), la couche de légumes à feuilles se forme de façon continue et les légumes à feuilles de la couche se déplacent selon une direction spécifiée.

6. Procédé comme revendiqué dans la revendication 5, dans lequel l'étape (ii) comporte le fait de commander la quantité de légumes à feuilles entrant dans la couche.

7. Procédé comme revendiqué dans l'une quelconque des revendications précédentes, dans lequel l'étape (iii) comporte le fait de former la couche en au moins une rangée (20) et de diviser la rangée pour former des touffes.

8. Procédé comme revendiqué dans la revendication 7, dans lequel on forme chaque rangée (20) en envoyant les légumes à feuilles dans un canal (18).

9. Procédé comme revendiqué dans la revendication 8, dans lequel des moyens sont prévus pour nettoyer l'entrée de chaque canal (18) par enlèvement des débris des légumes à feuilles.

10. Procédé comme revendiqué dans l'une quelconque des revendications 7 à 9, dans lequel chaque rangée se divise en portions de légumes à feuilles et les portions sont formées en touffes par des moyens de mise en forme.

11. Procédé comme revendiqué dans la revendication 10, dans lequel les moyens de mise en forme (28) comportent le compactage des portions pour leur donner une forme sensiblement circulaire.

12. Procédé comme revendiqué dans la revendication 10, dans lequel les moyens de mise en forme comportent le fait de laisser les portions tomber d'une distance spécifiée sous la force de pesanteur et sous la force d'un jet de fluide (32).

13. Appareil pour mettre en oeuvre le procédé revendiqué dans l'une quelconque des revendications précédentes.

14. Touffe congelée de légumes à feuilles préparé conformément au procédé revendiqué dans l'une quelconque des revendications 1 à 12.

15. Touffe congelée de légumes à feuilles comme revendiqué dans la revendication 14, les légumes à feuilles étant des épinards.
